# EUROPEAN PATENT APPLICATION

(11) **EP 4 737 406 A1**
(43) Date of publication of application: **06.05.2026**
(21) Application number: 24210332.3
(22) Date of filing: 01.11.2024
(51) Int. Cl.: C03C 3/064, C03C 3/089, C03C 8/24

(54) **BONDING AND SEALING MATERIALS**

(60) Divisional application: 25196723.8
(71) Applicant: Inficon AG, 9496 Balzers (LI)
(72) Inventor: MATA OSORO, Gustavo, 8600 Dübendorf (CH); ÅKERMARK, Torbjörn, 22100 Mariehamn (FI); BÜHLMANN, Kevin, 8880 Walenstadt (CH); ANDREAUS, Bernhard, 8640 Rapperswil (CH)
(74) Representative: Troesch Scheidegger Werner AG

(57) **Abstract**

A silicate glass comprising a Group 4 oxide, its use for joining and sealing materials, a sealing joint formed of the silicate glass, a method for joining and sealing materials with the silicate glass and a capacitive diaphragm gauge comprising the silicate glass to join and seal a membrane to a housing.

## Description

### TECHNICAL FIELD OF THE INVENTION

The current invention relates to a silicate glass for joining and sealing materials.

### DESCRIPTION OF THE RELATED ART

Numerous compositions are known for joining components in a gas-tight, in particular vacuum-tight manner. However, the compositions' resilience towards temperature and their chemical or mechanical durability vary greatly and limit the application possibilities of specific compositions.

### SUMMARY OF THE INVENTION

It is a task of current invention to provide compositions that have utility in sealing and joining materials, preferably in a gas-tight manner, with acceptable resilience to temperature and different chemical environments.

This task is solved by the use of a glass with the features of claim 1. Further embodiments of the use, as well as a method for joining and sealing materials, a sealing joint, a silicate glass, as well as a capacitive diaphragm gauge comprising a joint formed by the glass are defined by the features of further claims.

In an aspect, the present invention is directed to a use of a silicate glass for joining and sealing materials other than silicate glass materials, wherein the silicate glass comprises a Group 4 oxide.

It was surprisingly found that a silicate glass comprising a Group 4 oxide can effectively join and seal materials other than itself, i.e. materials other than silicate glass, for example ceramic materials. This silicate glass can form a gas-tight joint that is resistant to different chemical environments (e.g. plasma environments and/or environments comprising Cl₂, NF₃, CF₄, and/or BCl₃) and the coefficient of thermal expansion (CTE) can be modified by the type and amount of the Group 4 oxide, e.g. in order to align the CTE of the glass joint to the CTE of the materials which are joined and sealed by the glass.

The term "silicate glass" refers to any glass that comprises silicon dioxide, in particular as its main component. Silicate glass explicitly includes borosilicate glass, e.g. with 5 to 20 weight% boron trioxide, fused quartz glass and soda-lime glass. Silicate glass and borosilicate glass may comprise further components such as aluminium oxide (e.g. Al₂O₃), sodium carbonate, sodium oxide, potassium oxide, oxides of iron, cobalt, barium, thorium, lanthanum or cerium, fluorine. Specifically, the silicate glass for use in the present invention may comprise rare earth metals, e.g. scandium, yttrium, lanthanum, cerium, praseodymium, neodymium, samarium, europium, gadolinium, terbium, dysprosium, holmium, erbium, thulium, ytterbium and/or lutetium, e.g. up to 2 weight%. The glass for use in the present invention can join and seal components other than itself, i.e. materials other than silicate glass, e.g. ceramics or metals. This means that the glass can establish a mechanical connection, in particular a stable and/or non-detachable connection, between two components made of materials other than silicate glass, and at the same time seal the connection, e.g. in a gas-tight manner.

The materials other than silicate glass are only limited to the extent that these materials are not silicate glass materials. The materials can be of the same chemical composition or two materials of different chemical compositions can be joined and sealed. In an embodiment, these materials include any material that is not made of the same chemical composition as the silicate glass used for forming the joint. The materials other than silicate glass include, for example, solid (at room temperature) materials, such as metals and ceramics.

The silicate glass for use in the present invention comprises at least one, or a combination of Group 4 oxide(s). "Group 4" refers to the second group of transition metals containing Ti, Zr, Hf and Rf. The amount of the Group 4 oxide is not limited and the skilled person can adjust the amount according to the needs of a given application, e.g. to adjust the CTE. For example, the skilled person can choose a suitable glass and/or Group 4 oxide and/or Group 4 oxide content such that the CTE of the glass and of the material to be joined, e.g. a ceramic material, is matched as much as possible to ensure a good joining.

The CTE can be verified by standard means such as dilatometry, interferometry, and thermomechanical analysis, e.g. according to standards ASTM E831, ASTM E22, or DIN EN 821-1.

For example, the silicate glass can be applied in a molten state between two materials to be joined, or on one or both of the materials and the other material is subsequently positioned on the material comprising the molten glass. In an example, the silicate glass is screen printed over one material, e.g. a ceramic part, then the other material, e.g. a ceramic counterpart, is positioned on the printed glass, heat is then applied until the glass is molten, and the sandwich is cooled to solidify the joint.

In an embodiment of the use of a silicate glass according to the present invention, which may be combined with any of the embodiments of the use preaddressed or still to be addressed unless in contradiction,
the Group 4 oxide is selected from the group consisting of Ti oxide, Zr oxide and Hf oxide, optionally TiO₂, ZrO₂ and HfO₂, optionally HfO₂; and/or
the silicate glass comprises 0.001 mol% to 10 mol%, optionally 0.001 mol% to 5 mol%, optionally 0.001 mol% to 2 mol% of the Group 4 oxide.

The silicate glass may comprise Ti oxide, Zr oxide and Hf oxide, optionally TiO₂, ZrO₂ and HfO₂, individually or as a combination of any of these.

In an embodiment of the use of a silicate glass according to the present invention, which may be combined with any of the embodiments of the use preaddressed or still to be addressed unless in contradiction, silicate glass for joining and sealing materials other than silicate glass materials is free of lead and lead oxide, in particular lead(II) oxide, optionally comprises 1 mol% or less than 1 mol%, less than 0.5 mol%, less than 0.1 mol%, less than 0.01 mol% or less than 0.001 mol% lead and lead oxide, in particular lead(II) oxide.

In an embodiment of the use of a silicate glass according to the present invention, which may be combined with any of the embodiments of the use preaddressed or still to be addressed unless in contradiction, the materials other than silicate glass materials are ceramic or metallic materials.

In an embodiment of the use of a silicate glass according to the present invention, which may be combined with any of the embodiments of the use preaddressed or still to be addressed unless in contradiction, the ceramic materials are an oxide of aluminium, beryllium, cerium, zirconium, yttrium, or a combination thereof, optionally materials comprising or consisting of Al₂O₃, aluminium nitride (AlN) and/or silicon carbide (SiC).

As mentioned above, the silicate glass may join and seal materials of the same or of different compositions.

Exemplary metallic materials include stainless steels (e.g. stainless steel AISI 316 or AISI 304) and nickel alloys (e.g. Inconel or Hastelloys).

The materials are can also be plastics or non-silicate glass.

In an embodiment of the use of a silicate glass according to the present invention, which may be combined with any of the embodiments of the use preaddressed or still to be addressed unless in contradiction, the coefficient of thermal expansion (CTE) of the silicate glass for joining and sealing and the CTE of the materials other than silicate glass materials deviate less than about 20%, optionally less than about 5%, optionally less than about 2%. As mentioned above, the skilled person can adjust the CTE of the silicate glass by choosing a suitable glass and/or Group 4 oxide and/or Group 4 oxide content. Exemplary CTE values for the silicate glass and the material to be joined and sealed, in particular ceramic, can be in the range of 5.9 × 10⁻⁶ /K to 6.4 × 10⁻⁶ /K.

In an embodiment of the use of a silicate glass according to the present invention, which may be combined with any of the embodiments of the use preaddressed or still to be addressed unless in contradiction, the joining and sealing is gas-tight, in particular vacuum-tight.

Gas-tight, as used herein, specifically includes vacuum-tight, in particular relating to pressures of 0.01 mbar to 800 mbar, i.e. to the ability of the material to seal such that a pressure, in particular the aforementioned pressures, can be kept.

In an embodiment of the use of a silicate glass according to the present invention, which may be combined with any of the embodiments of the use preaddressed or still to be addressed unless in contradiction, the silicate glass for joining and sealing is selected from the group consisting of fused quartz glass, soda-lime glass and borosilicate glass.

In an embodiment of the use of a silicate glass according to the present invention, which may be combined with any of the embodiments of the use preaddressed or still to be addressed unless in contradiction, the silicate glass for joining and sealing comprises at least one of Na₂O, CaO and B₂O₃.

In an embodiment of the use of a silicate glass according to the present invention, which may be combined with any of the embodiments of the use preaddressed or still to be addressed unless in contradiction, the silicate glass for joining and sealing comprises SiO₂, Na₂O, B₂O₃ and optionally CaO.

In an embodiment of the use of a silicate glass according to the present invention, which may be combined with any of the embodiments of the use preaddressed or still to be addressed unless in contradiction, the silicate glass for joining and sealing comprises 0.001 mol% to 10 mol% Hf, optionally 0.001 mol% to 5 mol% Hf, optionally 0.001 mol% to 2 mol% mol% Hf.

In an embodiment of the use of a silicate glass according to the present invention, which may be combined with any of the embodiments of the use preaddressed or still to be addressed unless in contradiction, the silicate glass for joining and sealing comprises 25 mol% to 40 mol% B₂O₃; 15 mol% to 30 mol% Na₂O; 35 mol% to 50 mol% SiO₂; and/or 0.001 mol% to 5 mol% CaO.

In another aspect which may be combined with any of the embodiments or aspects preaddressed or still to be addressed unless in contradiction, the present invention is directed to a method for joining and sealing materials other than silicate glass materials comprising the steps of
(a) providing materials other than silicate glass materials as defined herein, and
(b) sealing and joining the materials of step (a) with a silicate glass as defined herein.

All definitions and examples provided in the context of the use of the silicate glass also apply to all other aspects, including the method for joining and sealing materials.

For example, the silicate glass can be applied in step (b) of the instant method in a molten state between two materials to be joined of step (a), or on one of the materials and the other material is subsequently positioned on the material comprising the molten glass. In an example, the silicate glass is screen printed over one material, e.g. a ceramic part, then the other material, e.g. a ceramic counterpart, is positioned on the printed glass, heat is then applied, e.g. as step (b), until the glass is molten, and the sandwich is cooled to solidify the joint. In step (a), one or both of the materials other than silicate glass materials may be provided with a layer of silicate glass attached (e.g. by screen printing) which is subsequently molten during step (b) while the materials are joined together such that the molten silicate glass can form the joint and seal.

In another aspect which may be combined with any of the embodiments or aspects preaddressed or still to be addressed unless in contradiction, the present invention is directed to a sealing joint formed of a silicate glass and materials other than silicate glass materials as defined herein.

All definitions and examples provided in the context of the use of the silicate glass and the method for joining and sealing materials other than silicate glass materials also apply to all other aspects, including the sealing joint formed of a silicate glass.

For example, the sealing joint can be formed between materials in sensors, in particular pressure sensors, e.g. between a membrane of a pressure sensor, optionally vacuum sensor, and structures which support the membrane in the sensor, e.g. a housing of the sensor. The pressure sensor can, for example, be a capacitive diaphragm gauge, e.g. with a membrane, optionally a ceramic membrane, which is sealed and joined to a structural part of the sensor, e.g. the housing, e.g. a metal housing, by the sealing joint.

In another aspect which may be combined with any of the embodiments or aspects preaddressed or still to be addressed unless in contradiction, the present invention is directed to a capacitive diaphragm gauge having a ceramic membrane, a housing, optionally a ceramic or metallic housing, and a sealing joint formed of a silicate glass as defined herein establishing a gas-tight, in particular vacuum-tight, joint between the ceramic membrane and the housing.

All definitions and examples provided in the context of the use of the silicate glass, the method for joining and sealing materials other than silicate glass materials and the sealing joint formed of a silicate glass also apply to all other aspects, including the sealing joint formed of a capacitive diaphragm gauge having a ceramic membrane, a housing and a sealing joint formed of a silicate glass as defined herein.

The term "housing" refers to any structural element or part thereof in the capacitive diaphragm gauge that supports the membrane. For example, the "housing" as used herein may be a structural part of the housing that is part of, separate or detachable from the housing or from other parts of the housing. Any component of the capacitive diaphragm gauge is considered a "housing" as long as it is in contact with and supports the membrane.

In another aspect which may be combined with any of the embodiments or aspects preaddressed or still to be addressed unless in contradiction, the present invention is directed to a silicate glass for joining and sealing materials other than silicate glass materials, wherein the silicate glass consists of
25 mol% to 40 mol% B₂O₃,
15 mol% to 30 mol% Na₂O,
35 mol% to 50 mol% SiO₂,
0.001 mol% to 5 mol% CaO, and
x mol% HfO₂, wherein x is > 0, optionally 1 to 12,
optionally 1 to 4 or 1 to 4.5.

All definitions and examples provided in the context of the use of the silicate glass, the method for joining and sealing materials other than silicate glass materials, the sealing joint formed of a silicate glass and the sealing joint formed of a capacitive diaphragm gauge having a ceramic membrane, a housing and a sealing joint formed of a silicate glass as defined herein also apply to all other aspects, including a silicate glass for joining and sealing materials other than silicate glass materials.

### BRIEF DESCRIPTION OF THE DRAWINGS

Embodiments of the current invention are described in more detail in the following with reference to the figures. These are for illustrative purposes only and are not to be construed as limiting. Depicted in
Fig. 1 is the effect of a Group 4 oxide on the coefficient of thermal expansion of a glass described herein;
Fig. 2 (a) and (b) are examples of a silicate glass for joining and sealing materials other than silicate glass materials; and in
Fig. 3 (a) an example of a silicate glass for joining and sealing materials other than silicate glass materials and in (b) a A capacitive diaphragm gauge with a sealing joint formed of a silicate glass as defined herein.

### DETAILED DESCRIPTION OF THE INVENTION

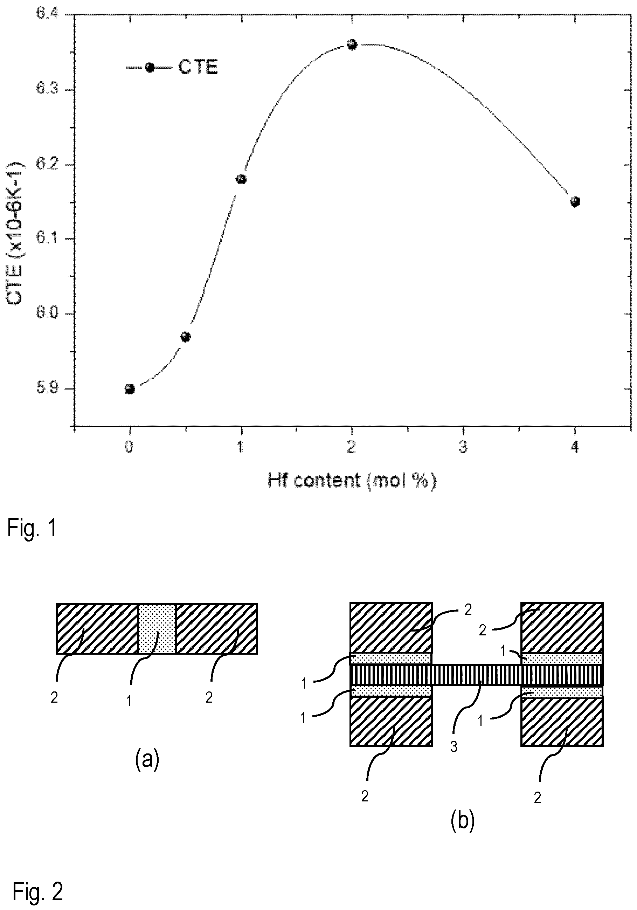

Figure 1 shows the effect of a Group 4 oxide on the coefficient of thermal expansion (CTE) of a glass described herein. The glass was of the following composition: 33 mol% B₂O₃, 20 mol% Na₂O, 41 mol% SiO₂, (6 -x mol%) CaO and x mol% HfO₂, wherein 1 < x < 6. It can be noted that the CTE can be finely tuned by the amount of the Group 4 oxide. The CTE was measured by dilatometry.
Figure 2 (a) shows a silicate glass (1) used for joining and sealing materials (2) other than silicate glass materials as described herein. The materials (2) can be the same or different materials. The silicate (glass) joins, i.e. bonds, and seals the materials together. In Figure 2 (b), a silicate glass (1) is used for joining and sealing a first material other than silicate glass, e.g. a membrane (3), e.g. a ceramic membrane, to a second material (2) other than silicate glass materials as described herein.

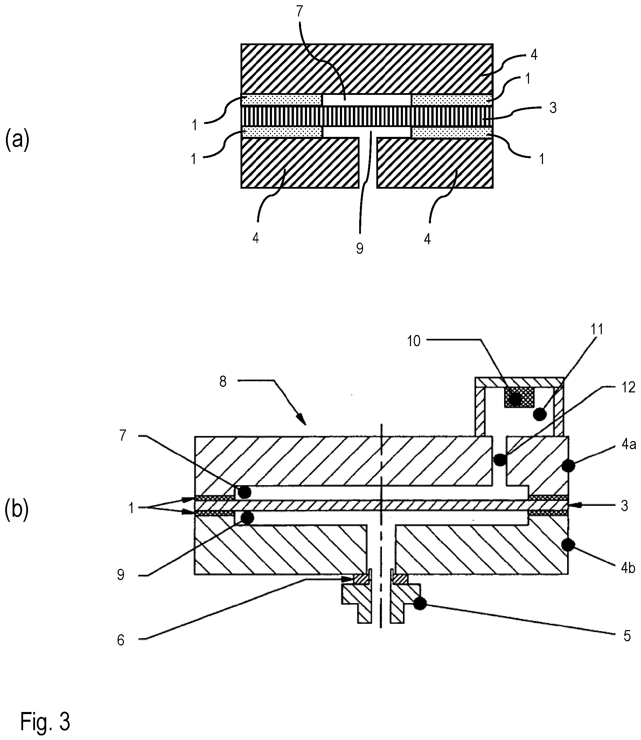

Figure 3 (a) shows how a silicate glass (1) can be used for joining and sealing materials (2) other than silicate glass materials by sealing a membrane (3) to a housing (4), e.g. in the context of a vacuum sensor, thus generating a sealed-off reference vacuum space (7) and a measuring space (9) which is separated from the reference vacuum space by the membrane (3). The deflection of the membrane is used to measure pressure in the measuring space (9) relative to the reference vacuum space (7). It is particularly advantageous for membrane-based vacuum sensors that the silicate glass (1) has a specifically controlled CTE so as not to interfere with the membrane (3) deflection and the measurement resulting therefrom under different temperature conditions. Also, the specifically controlled CTE warrants a gas-tight seal between the membrane (3) and the housing (4) at different temperatures.
Figure 3 (b) shows an exemplary capacitive diaphragm gauge (8) having a ceramic membrane (3), a housing comprising a first part (4a) and a second part (4b), optionally a ceramic housing, and a sealing joint formed of a silicate glass (1) as defined herein establishing a gas-tight, in particular vacuum-tight, joint between the ceramic membrane (3) and the housing parts (4a, 4b). The exemplary gauge comprises a sealed-off reference vacuum space (7) and a measuring space (9) which is separated from the reference vacuum space by the membrane (3). Connecting means (5) can be used to connect the gauge to a space in which a pressure should be measured and optional joining means (6) seal the connection. The gauge (8) can further comprise a getter for maintaining a vacuum and an associated getter space (11) and connection passage (12).

### REFERENCE SIGNS LIST

| | | | |
|---|---|---|---|
| 1 | silicate glass | 6 | joining means |
| 2 | materials other than silicate glass materials | 7 | reference vacuum space |
| | | 8 | vacuum measurement cell |
| 3 | membrane | | |
| 4 | housing | 9 | measuring space |
| 4a | first part of housing | 10 | getter |
| 4b | second part of housing | 11 | getter space |
| | | 12 | connection passage |
| 5 | connecting means | | |

## Claims

1. Use of a silicate glass (1) for joining and sealing materials (2) other than silicate glass materials, wherein the silicate glass comprises a Group 4 oxide.

2. The use according to claim 1, wherein
the Group 4 oxide is selected from the group consisting of Ti oxide, Zr oxide and Hf oxide, optionally TiO₂, ZrO₂ and HfO₂, optionally HfO₂; and/or
the silicate glass (1) comprises 0.001 mol% to 10 mol%, optionally 0.001 mol% to 5 mol%, optionally 0.001 mol% to 2 mol% of the Group 4 oxide.

3. The use according to claim 1 or 2, wherein the materials (2) other than silicate glass materials are ceramic or metallic materials.

4. The use according to claim 3, wherein the ceramic materials are an oxide of aluminium, beryllium, cerium, zirconium, yttrium, or a combination thereof, optionally materials comprising or consisting of Al₂O₃, aluminium nitride (AlN) and/or silicon carbide (SiC).

5. The use according to any of claims 1 to 4, wherein the coefficient of thermal expansion (CTE) of the silicate glass (1) for joining and sealing and the CTE of the materials (2) other than silicate glass materials deviate less than about 20%, optionally less than about 5%, optionally less than about 2%.

6. The use according to any of claims 1 to 5, wherein the joining and sealing is gas-tight.

7. The use according to any of claims 1 to 6, wherein the silicate glass (1) for joining and sealing is selected from the group consisting of fused quartz glass, soda-lime glass and borosilicate glass.

8. The use according to any of claims 1 to 7, wherein the silicate glass (1) for joining and sealing comprises at least one of Na₂O, CaO and B₂O₃.

9. The use according to any of claims 1 to 8, wherein the silicate glass (1) for joining and sealing comprises SiO₂, Na₂O, B₂O₃ and optionally CaO.

10. The use according to any of claims 1 to 9, wherein the silicate glass (1) for joining and sealing comprises 0.001 mol% to 10 mol% Hf, optionally 0.001 mol% to 5 mol% Hf, optionally 0.001 mol% to 2 mol% mol% Hf.

11. The use according to any of claims 1 to 10, wherein the silicate glass (1) for joining and sealing comprises
25 mol% to 40 mol% B₂O₃,
15 mol% to 30 mol% Na₂O,
35 mol% to 50 mol% SiO₂, and/or
0.001 mol% to 5 mol% CaO.

12. A method for joining and sealing materials (2) other than silicate glass materials comprising the steps of (a) providing materials (2) other than silicate glass materials as defined in any of claims 1 to 11, and (b) sealing and joining the materials (2) of step (a) with a silicate glass (1) as defined in any of claims 1 to 11.

13. A sealing joint formed of a silicate glass (1) and materials (2) other than silicate glass materials as defined in any of claims 1 to 11.

14. A capacitive diaphragm gauge (8) having a ceramic membrane (3), a housing (4), optionally a ceramic housing, and a sealing joint formed of a silicate glass (1) as defined in any of claims 1 to 11 establishing a vacuum-tight joint between the ceramic membrane (3) and the housing (4).

15. A silicate glass (1) for joining and sealing materials (2) other than silicate glass materials, wherein the silicate glass consists of
25 mol% to 40 mol% B₂O₃,
15 mol% to 30 mol% Na₂O,
35 mol% to 50 mol% SiO₂,
0.001 mol% to 5 mol% CaO, and
x mol% HfO₂,
wherein x is > 0, optionally 1 to 12, optionally 1 to 4 or 1 to 4.5.

## Amended claims

### Amended claims in accordance with Rule 137(2) EPC.

1. A capacitive diaphragm gauge (8) having a ceramic membrane (3), a housing (4), optionally a ceramic housing
**characterized by**
a sealing joint formed of a silicate glass (1) for joining and sealing materials (2) other than silicate glass materials,
wherein the silicate glass (1) comprises a Group 4 oxide,
and wherein the sealing joint establishes a vacuum-tight joint between the ceramic membrane (3) and the housing (4).

2. The capacitive diaphragm gauge (8) according to claim 1, wherein
the Group 4 oxide is selected from the group consisting of Ti oxide, Zr oxide and Hf oxide, optionally TiO₂, ZrO₂ and HfO₂, optionally HfO₂; and/or
the silicate glass (1) comprises 0.001 mol% to 10 mol%, optionally 0.001 mol% to 5 mol%, optionally 0.001 mol% to 2 mol% of the Group 4 oxide.

3. The capacitive diaphragm gauge (8) according to claim 1 or 2, wherein the materials (2) other than silicate glass materials are ceramic or metallic materials.

4. The capacitive diaphragm gauge (8) according to claim 3, wherein the ceramic materials are an oxide of aluminium, beryllium, cerium, zirconium, yttrium, or a combination thereof, optionally materials comprising or consisting of Al₂O₃, aluminium nitride (AlN) and/or silicon carbide (SiC).

5. The capacitive diaphragm gauge (8) according to any of claims 1 to 4, wherein the coefficient of thermal expansion (CTE) of the silicate glass (1) for joining and sealing and the CTE of the materials (2) other than silicate glass materials deviate less than about 20%, optionally less than about 5%, optionally less than about 2%.

6. The capacitive diaphragm gauge (8) according to any of claims 1 to 5, wherein the joining and sealing is gas-tight.

7. The capacitive diaphragm gauge (8) according to any of claims 1 to 6, wherein the silicate glass (1) for joining and sealing is selected from the group consisting of fused quartz glass, soda-lime glass and borosilicate glass.

8. The capacitive diaphragm gauge (8) according to any of claims 1 to 7, wherein the silicate glass (1) for joining and sealing comprises at least one of Na₂O, CaO and B₂O₃.

9. The capacitive diaphragm gauge (8) according to any of claims 1 to 8, wherein the silicate glass (1) for joining and sealing comprises SiO₂, Na₂O, B₂O₃ and optionally CaO.

10. The capacitive diaphragm gauge (8) according to any of claims 1 to 9, wherein the silicate glass (1) for joining and sealing comprises 0.001 mol% to 10 mol% Hf, optionally 0.001 mol% to 5 mol% Hf, optionally 0.001 mol% to 2 mol% mol% Hf.

11. The capacitive diaphragm gauge (8) according to any of claims 1 to 10, wherein the silicate glass (1) for joining and sealing comprises
25 mol% to 40 mol% B₂O₃,
15 mol% to 30 mol% Na₂O,
35 mol% to 50 mol% SiO₂, and/or
0.001 mol% to 5 mol% CaO.

12. A silicate glass (1) for joining and sealing materials (2) other than silicate glass materials, wherein the silicate glass consists of
25 mol% to 40 mol% B₂O₃,
15 mol% to 30 mol% Na₂O,
35 mol% to 50 mol% SiO₂,
0.001 mol% to 5 mol% CaO, and
x mol% HfO₂,
wherein x is > 0, optionally 1 to 12, optionally 1 to 4 or 1 to 4.5.
